# EUROPÄISCHE PATENTSCHRIFT

(11) **EP 3 900 528 B1**
(45) Veröffentlichungstag und Bekanntmachung des Hinweises auf die Patenterteilung: **13.12.2023**
(21) Anmeldenummer: 20171116.5
(22) Anmeldetag: 23.04.2020
(51) Int. Cl.: A01K 9/00

(54) **VERFAHREN UND VORRICHTUNG ZUR ZUBEREITUNG EINER TRÄNKE ZUR FÜTTERUNG VON NUTZTIEREN**
METHOD AND DEVICE FOR PREPARING A DRINKING TROUGH FOR FEEDING LIVESTOCK
PROCÉDÉ ET DISPOSITIF DE PRÉPARATION D'UN ABREUVOIR DESTINÉ À L'ALIMENTATION D'ANIMAUX D'ÉLEVAGE

(43) Veröffentlichungstag der Anmeldung: 27.10.2021
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(56) Entgegenhaltungen:
- DE-U1-202010 005 053
- GB-A- 2 120 563
- US-A1- 2015 036 451
- Floren H K ET AL: "Note-OctobreUtilisation", , 15 October 2016 (2016-10-15), pages 1-2, XP093020817, Retrieved from the Internet: URL:http://www.happy-production.com/wp-con tent/uploads/2017/02/Utilisation-du-refrac tomètre-BRIX-pour-estimer-la-matiere-seche -dans-le-lait-reconstitué-des-veaux.pdf [retrieved on 2023-02-03]

## Beschreibung

Zur Fütterung von Nutztieren, beispielsweise Kälbern oder Lämmern, werden unter anderem Tränkeautomaten oder fahrbare Milchbehälter eingesetzt, die eine temperierte Tränke zubereiten. Die Tränke kann aus Milchaustauschpulver (MAT) und Wasser gemischt werden oder aus MAT, Wasser und Komponenten zur Aufwertung oder Ergänzung der Tränke (im Folgenden als "Zusätze" oder "Zusatzstoffe" bezeichnet); sie kann ausschließlich aus Vollmilch bestehen oder aus einem Gemisch von Vollmilch, Milchaustauschpulver, Wasser und Zusätzen.

Bei der Herstellung einer Tränke spielt deren gleichbleibende Qualität eine besonders große Rolle. Nicht nur, weil dem zu fütternden Tier aus Gründen des Tierwohls eine gute Qualität zur Verfügung gestellt werden soll, sondern vor allem, weil nur bei gleichbleibend guter Qualität der Tränke das Ziel erreicht werden kann, z.B. aus einem Kalb ein gesundes und leistungsstarkes, ausgewachsenes Rind zu entwickeln. Auch Schwankungen der Qualität auf befriedigendem bis hohem Niveau gelten in diesem Kontext als nachteilig.

Als technische Produkte zur Zubereitung einer Tränke sind Tränkeautomaten oder fahrbare Milchbehälter bekannt geworden, die in der Lage sind, eine Tränke aus Vollmilch oder aus Milchaustauschpulver und Wasser oder aus einem Gemisch aus Vollmilch, Milchaustauschpulver und Wasser zuzubereiten und diese ggf. mit Zusätzen anzureichern.

Ein Tränkeautomat mit einem Vollmilchdepot ist zum Beispiel aus der Druckschrift EP 3 622 812 A1 bekannt geworden. Aus der Druckschrift EP 2 893 803 B1 ist ein Milchwagen zur Fütterung von Nutztieren bekannt, in dem eine Tränke angemischt werden kann.

Refraktometer sind Messgeräte, mit denen der Brechungsindex von Flüssigkeiten durch Refraktometrie gemessen werden kann. Sie nutzen dafür das Verhalten von Licht am Übergang zwischen einem Prisma mit bekannten Eigenschaften und der zu prüfenden Flüssigkeit. Wenn die generelle Zusammensetzung einer Flüssigkeit bekannt ist, kann ein Refraktometer dazu dienen, die Konzentration darin gelöster Stoffe zu messen. Im Zusammenhang mit der Ernte von Wein, Zuckerrüben und auch Äpfeln wird auf diese Weise der Zuckergehalt der Pflanzen bestimmt und üblicherweise in Grad Oechsle angegeben. Im Bereich der Nutztierhaltung sind Handrefraktometer zur Prüfung von Kolostrum gebräuchlich. Dies erfolgt durch Ablesen eines Messwerts auf einer Skala in Grad Brix. Der Brix-Wert ist mit dem IgG-Gehalt des Kolostrums korreliert und gibt daher Aufschluss über die Qualität des Kolostrums. Dokument XP093020817 offenbart das Verwenden eines Refraktometers zur Zubereitung einer Tränke zur Fütterung von Nutztieren.

Davon ausgehend ist es die Aufgabe der Erfindung, ein Verfahren und eine Vorrichtung zur Zubereitung einer Tränke zur Fütterung von Nutztieren zur Verfügung zu stellen, mit denen auf einfache Weise eine gleichbleibende und hohe Qualität der Tränke erzielt werden kann.

Diese Aufgabe wird gelöst durch das Verfahren mit den Merkmalen des Anspruchs 1 und die Vorrichtung mit den Merkmalen des Anspruchs 9. Vorteilhafte Ausgestaltungen sind in den sich jeweils anschließenden Unteransprüchen angegeben.

Das Verfahren dient zur Zubereitung einer Tränke zur Fütterung von Nutztieren durch Anmischen einer Tränke aus mehreren Tränkekomponenten in einem Anmischbehälter, wobei die Tränkekomponenten eine flüssige Komponente und Milchaustauschpulver umfassen und das Verfahren die folgenden Schritte aufweist:
- Messen eines Brechungsindex der flüssigen Komponente und/oder der angemischten Tränke mit einem Refraktometer, und
- Berechnen einer Menge einer Tränkekomponente, die in den Anmischbehälter einzugeben ist, um einen vorgegebenen Trockensubstanzgehalt der Tränke zu erzielen, wobei das Berechnen mit einer elektronischen Steuerung auf Grundlage des gemessenen Brechungsindex erfolgt.

Die Erfindung beruht auf der Erkenntnis, dass Schwankungen der Tränkequalität bei der Zubereitung der Tränke mit herkömmlichen Verfahren und Vorrichtungen nicht nur auf Ungenauigkeiten bei der Dosierung der Tränkekomponenten, sondern ebenso auf Schwankungen der Qualität der Tränkekomponenten zurückzuführen sind.

Erfahrungsgemäß gehen die Anwender eines Tränkeautomaten oder eines fahrbaren Milchbehälters/Milchwagens bei der Verwendung von industriell hergestelltem Milchaustauschpulver (MAT) davon aus, dass die Qualität gleichbleibend ist. Abweichend von dieser allgemeinen Meinung ist aber die Qualität von MAT nicht konstant, sondern durchaus schwankend. Auch die Qualität von Vollmilch schwankt erheblich, weil sie von der Nahrungsaufnahme und dem Gesundheitszustand der Milch gebenden Kühe abhängig ist. Tatsächlich ist es häufig so, dass Kälber mit Vollmilch gefüttert werden, deren Qualität für den Verkauf an die Meierei nicht ausreicht. Hier setzt die Erfindung an und schlägt vor, die Qualität der angemischten Tränke oder einer flüssigen Tränkekomponente (insbesondere Vollmilch) vor der Bereitstellung der Tränke unter Verwendung eines Refraktometers zu überprüfen, so dass die Qualität der Tränke gegebenenfalls durch Zugabe von Milchaustauschpulver und/oder Zusätzen auf ein gleichbleibendes Zielniveau gebracht werden kann.

Zu diesem Zweck wird mit dem Refraktometer der Brechungsindex der angemischten Tränke oder einer flüssigen Tränkekomponente gemessen. Damit ist gemeint, dass vom Messprinzip des Refraktometers Gebrauch gemacht und ein vom Brechungsindex abhängiger Wert ermittelt wird. Eine Ermittlung des Brechungsindex selbst im physikalischen Sinn, also als dimensionslose Größe, ist nicht notwendig. Einbezogen ist Vielmehr die Erfassung eines Messwerts mit dem Refraktometer auf einer beliebigen Skala, beispielsweise in Grad Brix. Hintergrund dieses Vorgehens ist, dass der Brechungsindex in engem Zusammenhang mit dem Trockensubstanzanteil der Tränke bzw. der Tränkekomponente steht, wobei der Trockensubstanzanteil ein Gradmesser für die Qualität der Tränke bzw. der Tränkekomponente ist. In der Regel gilt: Je mehr Trockensubstanz enthalten ist, desto besser ist die Qualität der Tränke.

Der Berechnungsschritt der Erfindung umfasst zwei Alternativen. Gemäß einer optionalen Alternative wird auf Grundlage des gemessenen Brechungsindex ein Trockensubstanzanteil der Tränke berechnet. Je nach Art des von dem Refraktometer gelieferten Messwerts kann die Berechnung unterschiedlich ausgestaltet sein. Liefert das Refraktometer beispielsweise einen Messwert in Grad Brix, kann die Berechnung in einer Zuordnung eines zugehörigen Trockensubstanzanteils zu dem gemessenen Wert bestehen. Hierzu kann ein beispielsweise als Funktion oder als Tabelle in der Steuerung hinterlegter Zusammenhang zwischen Messwert in Grad Brix und Trockensubstanzanteil von der Steuerung ausgewertet werden. Falls das Refraktometer aufgrund des bekannten Zusammenhangs bereits in einer den Trockensubstanzanteil angebenden Einheit, beispielsweise in %TS (Trockensubstanzanteil in %) kalibriert ist, findet keine weitere Berechnung statt und die Berechnung wurde bereits von einer in das Refraktometer integrierten Steuerung ausgeführt.

In jedem Fall wird auf Grundlage des gemessenen Brechungsindex eine Menge einer Tränkekomponente, die in den Anmischbehälter einzugeben ist, um einen vorgegebenen Trockensubstanzgehalt der Tränke zu erzielen, berechnet. Beispielsweise kann eine Gewichtsangabe für die einzugebende Menge der Tränkekomponente berechnet werden. In diese Berechnung können neben dem von dem Refraktometer gelieferten Messwert weitere Parameter einfließen, insbesondere eine in dem Anmischbehälter befindliche Menge der angemischten Tränke oder eine Sollmenge der noch anzumischenden Tränke. Zur Erfassung der in dem Anmischbehälter befindlichen Menge kann zum Beispiel ein Füllstandssensor oder eine Waage verwendet werden. Die Waage kann zum Beispiel in eine Zubereitungseinheit integriert sein und mit der Steuerung verbunden, so dass das ermittelte Gewicht bei der Berechnung automatisch berücksichtigt werden kann. Auch ein manuelles Wiegen - zum Beispiel auf einer Plattformwaage - ist möglich, wobei dann das ermittelte Gewicht von einem Benutzer erfasst und an die Steuerung übermittelt bzw. in die Steuerung eingegeben werden kann. Alternativ kann die Menge anhand bekannter, in den Anmischbehälter dosierter Mengen der Tränkekomponenten ermittelt werden.

Die bei der Erfindung vorgesehene Verwendung des Refraktometers in Verbindung mit der automatisierten Berechnung des Trockensubstanzanteils bzw. der einzugebenden Menge der Tränkekomponente ermöglicht es einem Benutzer, eine gleichbleibende und hohe Qualität der Tränke zu erzielen. Weil die Messung mit dem Refraktometer, die vollautomatisch abläuft, in der Regel nur wenige Sekunden dauert, kann das Verfahren innerhalb kürzester Zeit ausgeführt werden, ohne die gewohnten Abläufe wesentlich verändern zu müssen. Im Idealfall entsteht überhaupt kein zusätzlicher Arbeitsaufwand. Von besonderem Vorteil ist, dass die Ausführung des Verfahrens keinerlei spezielle Fachkenntnisse einer Bedienperson erfordert.

Der Anmischbehälter kann zur Zubereitung einzelner Tränkerationen ein Fassungsvermögen im Bereich von 0,4 1 bis 5 1 aufweisen, wie bei einem herkömmlichen Tränkeautomaten. Es kann jedoch auch ein wesentlich größerer Anmischbehälter zur Zubereitung einer größeren Tränkemenge, die auf zahlreiche Tiere verteilt wird, Anwendung finden. In diesem Fall kann der Anmischbehälter ein Fassungsvermögen zum Beispiel im Bereich von 50 l bis 500 l aufweisen, wie von herkömmlichen Milchwagen bekannt. Der Anmischbehälter kann Teil einer Zubereitungseinheit sein. Er kann eine Einrichtung zum Durchmischen der Tränke aufweisen, insbesondere ein Rührwerk oder alternativ eine Pumpe mit einer Rückführleitung, so dass aus dem Anmischbehälter abgepumpte Tränke zwecks Durchmischung in den Anmischbehälter zurückgeführt werden kann.

Das Refraktometer kann dem Anmischbehälter oder einem Vorratsbehälter, insbesondere einem Vorratsbehälter für Vollmilch zugeordnet sein. "Zugeordnet" bedeutet in diesem Zusammenhang, dass das Refraktometer so angeordnet ist, dass es den Brechungsindex von in dem Anmisch- oder Vorratsbehälter befindlicher Flüssigkeit messen kann. Hierzu kann eine Grenzfläche des Refraktometers, die mit der zu messenden Flüssigkeit zu benetzen ist, innerhalb des jeweiligen Behälters angeordnet sein, z.B. etwa bündig in eine Wandung des Behälters integriert. Eine Zuordnung zu dem Vorratsbehälter schließt außerdem eine Anordnung des Refraktometers in einer Zuführleitung von dem Vorratsbehälter zu dem Anmischbehälter ein. Es versteht sich, dass die Verwendung eines Vorratsbehälters zur Ausführung des Verfahrens nicht erforderlich ist. Es handelt sich um eine Option, die unter anderem zur (anteiligen) Fütterung mit Vollmilch sinnvoll ist.

Wie die angesprochenen Alternativen zeigen, kann das Verfahren auf unterschiedliche Weisen ausgeführt werden, die auch miteinander kombiniert werden können. Drei in der Praxis besonders relevante Varianten sind nachfolgend angegeben, wobei für die Variante A nur in Kombination mit einer der Varianten B oder C Schutz beansprucht wird:
*Variante A:* Verfahren zur Herstellung einer Tränke zur Fütterung von Nutztieren mit den folgenden Schritten:
- Anmischen einer Tränke aus mehreren Tränkekomponenten in einem Anmischbehälter, wobei die Tränkekomponenten eine flüssige Komponente und Milchaustauschpulver umfassen,
- Messen eines Brechungsindex der angemischten Tränke mit einem Refraktometer,
- Berechnen eines Trockensubstanzgehalts der Tränke mit einer elektronischen Steuerung auf Grundlage des gemessenen Brechungsindex.

Bei der Variante A kann einem Benutzer auf einfache Weise eine präzise Angabe des Trockensubstanzgehalts zur Verfügung gestellt werden, unabhängig von einer Verwendung von Vollmilch.

*Variante B:* Verfahren zur Herstellung einer Tränke zur Fütterung von Nutztieren mit den folgenden Schritten:
- Anmischen einer Tränke aus mehreren Tränkekomponenten in einem Anmischbehälter, wobei die Tränkekomponenten eine flüssige Komponente und Milchaustauschpulver umfassen,
- Messen eines Brechungsindex der angemischten Tränke mit einem Refraktometer,
- Berechnen einer Menge einer Tränkekomponente, die zusätzlich in den Anmischbehälter einzugeben ist, um einen vorgegebenen Trockensubstanzgehalt der Tränke zu erzielen, wobei das Berechnen der Menge mit einer elektronischen Steuerung auf Grundlage des gemessenen Brechungsindex erfolgt.

Bei der Variante B kann auf einfache Weise eine bereits angemischte Tränke um die berechnete Menge einer Tränkekomponente ergänzt werden, um eine Tränke mit der gewünschten Qualität (entsprechend dem vorgegebenen Trockensubstanzgehalt) zu erhalten. Dies ist ebenfalls unabhängig von einer Verwendung von Vollmilch. Als flüssige Tränkekomponenten können z.B. Wasser und Vollmilch in frei wählbaren Anteilen kombiniert werden.

*Variante C:* Verfahren zur Herstellung einer Tränke zur Fütterung von Nutztieren mit den folgenden Schritten:
- Anmischen einer Tränke aus mehreren Tränkekomponenten in einem Anmischbehälter, wobei die Tränkekomponenten Vollmilch und Milchaustauschpulver umfassen,
- Messen eines Brechungsindex der Vollmilch mit einem Refraktometer,
- Berechnen einer Menge einer Tränkekomponente, die in den Anmischbehälter einzugeben ist, um einen vorgegebenen Trockensubstanzgehalt der Tränke zu erzielen, wobei das Berechnen der Menge mit einer elektronischen Steuerung auf Grundlage des gemessenen Brechungsindex erfolgt.

Bei der Variante C kann auf einfache Weise eine Tränke mit der gewünschten Qualität (entsprechend dem vorgegebenen Trockensubstanzgehalt) angemischt werden, indem auf Grundlage des gemessenen Brechungsindex die Qualität der verwendeten Vollmilch bei der Dosierung mindestens einer weiteren Tränkekomponente (zum Beispiel Milchaustauscher, ein Zusatzstoff oder Wasser) berücksichtigt wird.

Bei der Erfindung ist die Steuerung mit dem Refraktometer verbunden und das Messen des Brechungsindex sowie das Berechnen erfolgen vollautomatisch. Grundsätzlich ist eine manuelle Erfassung des mit dem Refraktometer ermittelten Messwerts und eine manuelle Eingabe dieses Messwertes in die Steuerung ebenfalls möglich, dies wird allerdings hier nicht beansprucht.

Eine automatische Übermittlung der Daten vom Refraktometer an die Steuerung, über eine drahtgebundene oder auch drahtlose Verbindung, führt jedoch zu einer Erfindungsgemässen Automatisierung des Ablaufs. Das Anmischen der Tränke kann ebenfalls von der Steuerung gesteuert werden, sodass das gesamte Verfahren vollautomatisch ausgeführt werden kann.

In einer Ausgestaltung protokolliert die Steuerung die Menge und/oder den Trockensubstanzgehalt und/oder teilt einem Benutzer mittels einer Nachricht, Anzeige oder Sprachausgabe die Menge und/oder den Trockensubstanzgehalt mit. Anhand eines Protokolls können die für die Qualität der Tränke wichtigen Daten über einen längeren Zeitraum verfügbar gemacht werden. Eine direkt an einen Benutzer gerichtete Mitteilung in Form einer Nachricht (beispielsweise Textnachricht, E-Mail, SMS, etc.), Anzeige oder Sprachausgabe erleichtert eine augenblickliche Kenntnisnahme von der Menge oder dem Trockensubstanzgehalt, sodass der Benutzer gegebenenfalls sofort reagieren kann. Beispielsweise kann ein Benutzer anhand des mitgeteilten Trockensubstanzanteils entscheiden, ob die zubereitete Tränke für die weitere Verwendung die gewünschte Qualität aufweist oder er kann die mitgeteilte Menge einer Tränkekomponente der Tränke unmittelbar noch hinzufügen, um die gewünschte Qualität zu erreichen.

In einer Ausgestaltung schließt die Steuerung auf einen leeren Vorratsbehälter und informiert einen Benutzer entsprechend mittels einer Nachricht, Anzeige oder Sprachausgabe, falls der Trockensubstanzgehalt über ein vorgegebenes Maß hinaus von einem Sollwert abweicht. Der Benutzer wird also unmittelbar darauf hingewiesen, dass die zubereitete Tränke die Vorgaben nicht einhält und dass dies vermutlich auf einen leeren Vorratsbehälter zurückzuführen ist. Dieses Vorgehen kann unter Umständen eine Vielzahl von Füllstandssensoren für die einzelnen Vorratsbehälter entbehrlich machen.

In einer Ausgestaltung wird die berechnete Menge automatisch mit einer Dosiereinrichtung in den Anmischbehälter eingegeben. Grundsätzlich kann die berechnete Menge auch manuell hinzugefügt werden, gegebenenfalls zum Beispiel unter Zuhilfenahme einer Waage. Wie bereits erläutert, kann die berechnete Menge eine Menge sein, die für das erstmalige Anmischen der Tränke benötigt wird und die insbesondere unter Auswertung des Brechungsindex einer Vollmilchkomponente berechnet wurde. Es kann ebenso gut jedoch eine einer bereits angemischten Tränke noch hinzuzufügende Menge der jeweiligen Tränkekomponente sein. Je nachdem, ob sich die berechnete Menge auf eine flüssige oder feste Tränkekomponente bezieht, kann die Dosiereinrichtung unterschiedlich ausgestaltet sein. Beispielsweise kann ein Schneckenförderer zum Dosieren von Milchaustauschpulver verwendet werden. Bei einer flüssigen Tränkekomponente kann die Dosiereinrichtung beispielsweise ein Absperrventil aufweisen, das in einer Zuführleitung angeordnet ist.

In einer Ausgestaltung wird auf Grundlage der berechneten Menge oder des berechneten Trockensubstanzgehalts eine Dosiereinrichtung für die betreffende Tränkekomponente kalibriert. Die richtige Kalibrierung von Dosiereinrichtungen spielt im Zusammenhang mit Tränkeautomaten eine wichtige Rolle. Beruht die Dosierung auf einer Zeitsteuerung (beispielsweise Vorgabe einer Förderzeit eines Schneckenförderers oder einer Öffnungszeit eines Ventils), umfasst die Kalibrierung eine Festlegung oder Korrektur eines Faktors, der die in einer vorgegebenen Zeit dosierte Menge angibt. Bei herkömmlichen Tränkeautomaten muss die Kalibrierung in der Regel manuell erfolgen, zum Beispiel durch Auswiegen einzelner, mit einer Dosiereinrichtung zudosierter Tränkekomponentenmengen. Dieser Vorgang kann auch teilweise automatisiert werden. Die in der Ausgestaltung der Erfindung vorgesehene Kalibrierung auf Grundlage der berechneten Menge oder des berechneten Trockensubstanzgehalts geht über eine solche herkömmliche Kalibrierung hinaus, weil sie nicht nur die dosierten Mengen, sondern zugleich die Qualität der einzelnen, zugeführten Tränkekomponenten berücksichtigt.

In einer Ausgestaltung ist die flüssige Komponente Vollmilch und/oder die Tränkekomponenten umfassen einen Zusatzstoff. Wie bereits erwähnt, kann die Tränke aus unterschiedlichen Komponenten angemischt werden, im einfachsten Fall zum Beispiel ausschließlich aus Wasser und Milchaustauschpulver. Als flüssige Tränkekomponente kann auch ausschließlich Vollmilch eingesetzt werden oder eine Kombination aus Vollmilch und Wasser in beliebigem Verhältnis. Die Zusatzstoffe können beispielsweise Vitaminpräparate oder Medikamente sein. Bei der Erfindung kann der Einfluss sämtlicher Komponenten auf die Qualität der Tränke berücksichtigt werden.

In einer Ausgestaltung ist die flüssige Komponente Wasser und die Tränkekomponente, deren Menge berechnet wird, Milchaustauschpulver oder ein Zusatzstoff, wobei die Steuerung anhand der berechneten Menge und/oder anhand des berechneten Trockensubstanzgehalts der angemischten Tränke eine Qualitätsbewertung des Milchaustauschpulvers oder Zusatzstoffs vornimmt, wobei die Steuerung das Ergebnis der Qualitätsbewertung protokolliert und/oder einem Benutzer mittels einer Nachricht, Anzeige oder Sprachausgabe mitteilt. Auf diese Weise kann das Verfahren eingesetzt werden, um die Qualität des Milchaustauschpulvers oder Zusatzstoffs zu überprüfen und gegebenenfalls geeignete Konsequenzen daraus zu ziehen. Die Qualitätsbewertung kann auch in die bereits erläuterte Kalibrierung einfließen.

Die Vorrichtung zur Zubereitung eine Tränke zur Fütterung von Nutztieren weist die folgenden Merkmale auf:
- einen Anmischbehälter zum Anmischen der Tränke aus mehreren Tränkekomponenten, wobei die Tränkekomponenten eine flüssige Komponente und Milchaustauschpulver umfassen,
- ein Refraktometer, das entweder dem Anmischbehälter zugeordnet und dazu ausgebildet ist, einen Brechungsindex der in dem Anmischbehälter befindlichen Tränke zu messen, oder das einem Vorratsbehälter für die flüssige Komponente zugeordnet und dazu ausgebildet ist, einen Brechungsindex der flüssigen Komponente zu messen, und
- einer elektronischen Steuerung, die mit dem Refraktometer verbunden und dazu ausgebildet ist, vollautomatisch auf Grundlage des gemessenen Brechungsindex eine Menge einer Tränkekomponente, die in den Anmischbehälter einzugeben ist, um einen vorgegebenen Trockensubstanzgehalt der Tränke zu erzielen, zu berechnen.

Die Vorrichtung ist insbesondere zur Ausführung des Verfahrens nach einem der Ansprüche 1 bis 8 geeignet und/oder eingerichtet. Diese Einrichtung kann insbesondere in einer entsprechend angepassten Steuerungssoftware der Steuerung zum Ausdruck kommen. Alle Erläuterungen der Merkmale und Vorteile des Verfahrens gelten für die Vorrichtung entsprechend. Es versteht sich, dass die Vorrichtung so ausgeführt werden kann, dass sie zur Ausführung des Verfahrens gemäß den vorstehend erläuterten Varianten A, B und/oder C eingerichtet ist.

In einer Ausgestaltung weist die Vorrichtung einen Datenspeicher und/oder eine Kommunikationseinrichtung und/oder eine Anzeige und/oder eine Sprachausgabeeinrichtung auf, wobei die Steuerung dazu ausgebildet ist, die Menge und/oder den Trockensubstanzgehalt in dem Datenspeicher zu protokollieren und/oder in Form einer Nachricht mit der Kommunikationseinrichtung zu versenden und/oder auf der Anzeige anzuzeigen und/oder in Form einer Sprachausgabe mit der Sprachausgabeeinrichtung auszugeben. Diese Ausgestaltung ermöglicht das bereits erläuterte Protokollieren der berechneten Daten bzw. eine entsprechende Mitteilung an einen Benutzer. Auf die vorstehenden Erläuterungen dazu wird verwiesen.

In einer Ausgestaltung weist die Vorrichtung eine Dosiereinrichtung für eine Tränkekomponente auf. Auch hierzu wird auf die vorstehenden Erläuterungen verwiesen.

In einer Ausgestaltung ist die Steuerung dazu ausgebildet, die berechnete Menge durch Ansteuern der Dosiereinrichtung automatisch in den Anmischbehälter einzugeben. Dies wurde ebenfalls bereits im Zusammenhang mit dem Verfahren erläutert.

In einer Ausgestaltung ist die Steuerung dazu ausgebildet, die Dosiereinrichtung auf Grundlage der berechneten Menge oder des berechneten Trockensubstanzgehalts zu kalibrieren. Diese Kalibrierung wurde bereits im Zusammenhang mit dem Verfahren erläutert.

In einer Ausgestaltung ist die Vorrichtung ein Tränkeautomat oder ein Milchwagen. Im ersten Fall handelt es sich bei dem Anmischbehälter um einen Anmischbehälter des Tränkeautomaten, der insbesondere zur Zubereitung einer für ein einzelnes Tier bestimmten Tränkeration vorgesehen ist. Im zweiten Fall ist der Anmischbehälter ein größerer Behälter des Milchwagens, dient also nicht nur zum Anmischen der Tränke, sondern auch für deren Transport und Verteilung mit dem Milchwagen. Der Milchwagen kann hierzu weitere Funktionen bieten, beispielsweise durch einen Fahrantrieb, eine Fördereinrichtung zum Abgeben der Tränke, eine Dosiersteuerung für die Fördereinrichtung und/oder eine Heizung zum Temperieren der Tränke.

Handelt es sich bei der Vorrichtung um einen Tränkeautomaten, kann das Refraktometer insbesondere dem Anmischbehälter oder einer Zuführleitung, die mit einem Vorratsbehälter für Vollmilch verbunden wird, zugeordnet sein. Das Refraktometer kann jedoch auch einem Vorratsbehälter, beispielsweise für Vollmilch, zugeordnet sein, der nicht zu dem Tränkeautomaten selbst zählt, sondern mit diesem verbunden wird. In diesem Fall kann eine insbesondere drahtlose Datenverbindung zwischen dem Refraktometer und der Steuerung sinnvoll sein.

Handelt es sich bei der Vorrichtung um einen Milchwagen, kann das Refraktometer dem Anmischbehälter zugeordnet sein. Die Steuerung kann sich ebenfalls in dem Milchwagen befinden. Es ist jedoch ebenfalls möglich, das Refraktometer einem Vorratsbehälter oder einer damit verbundenen Zuführleitung insbesondere für Vollmilch zuzuordnen, um die Qualität der Vollmilch bei der Zubereitung der Tränke in dem Milchwagen berücksichtigen zu können. Auch hier kann eine Datenverbindung zwischen dem externen Refraktometer und der Steuerung im Milchwagen sinnvoll sein, gegebenenfalls auch drahtlos.

In einer Ausgestaltung ist der Milchwagen mit einer Befüllstation kombiniert, die den Vorratsbehälter und/oder die Dosiereinrichtung aufweist. Die Befüllstation ist so ausgestaltet, dass der Milchwagen an einem vorgegebenen Platz abgestellt und dort von der Befüllstation befüllt werden kann. Dieses Befüllen kann manuell erfolgen oder unter Zuhilfenahme geeigneter Dosiereinrichtungen auch ganz oder teilweise automatisch. Das Refraktometer kann wiederum dem Anmischbehälter des Milchwagens oder wahlweise einem Vorratsbehälter, der zu der Befüllstation zählt oder mit dieser verbunden ist, zugeordnet sein. Die Befüllstation kann auch eine eigene (weitere) Steuerung aufweisen, die gegebenenfalls mit der Steuerung in dem Milchwagen kommunizieren kann.

Nachfolgend wird die Erfindung anhand von in Figuren dargestellten Ausführungsbeispielen näher erläutert. Es zeigen:
- Figur 1: einen Tränkeautomaten in einer schematischen Darstellung,
- Figur 2: einen weiteren Tränkeautomaten in einer schematischen Darstellung, und
- Figur 3: einen Milchwagen mit einer Befüllstation, ebenfalls in einer schematischen Darstellung.

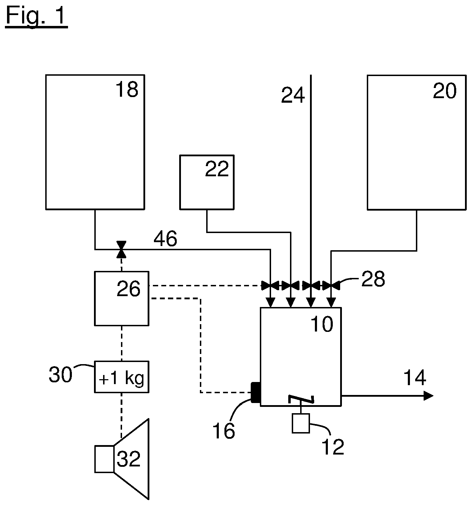

Die Vorrichtung aus Figur 1 umfasst einen Anmischbehälter 10 mit einem Rührwerk 12, mit dem alle in den Anmischbehälter 10 eingegebenen Tränkekomponenten durchmischt werden können. Der Pfeil 14 führt zu einer Abgabeeinrichtung für die Tränke, beispielsweise zu einem Abrufstand mit einem Saugnuckel. Dem Anmischbehälter 10 ist ein Refraktometer 16 zugeordnet, mit dem ein Brechungsindex von in dem Anmischbehälter 10 befindlicher Tränke gemessen werden kann.

Weiterhin umfasst die Vorrichtung aus Figur 1 einen Vorratsbehälter 18 für Vollmilch und einen Vorratsbehälter 20 für Milchaustauschpulver. Ein kleinerer Vorratsbehälter 22 ist für Zusatzstoffe vorgesehen. Die Leitung 24 ist mit einem nicht gezeigten Wasseranschluss verbunden.

Aus jedem der drei Vorratsbehälter 18, 20, 22 und aus der Leitung 24 können die jeweiligen Tränkekomponenten in den Anmischbehälter 10 eingegeben werden. Dies geschieht nach Maßgabe einer Steuerung 26, die für jede Tränkekomponente mit einer geeigneten Dosiereinrichtung 28 (in Figur 1 nur symbolisch angedeutet) zusammenwirkt. Auf diese Weise können nach Maßgabe der Steuerung 26 alle genannten Tränkekomponenten in den Anmischbehälter 10 dosiert werden.

Das Refraktometer 16 ist ebenfalls mit der Steuerung 26 verbunden, sodass die Steuerung 26 den gemessenen Brechungsindex auswerten und bei der Berechnung des Trockensubstanzgehalts der in dem Anmischbehälter 10 befindlichen Tränke und/oder einer Menge, die noch in den Anmischbehälter eingegeben werden muss, um einen gewünschten Trockensubstanzgehalt zu erzielen, automatisch berechnen kann.

Im dargestellten Beispiel können die berechneten Werte (Trockensubstanzgehalt und/oder hinzuzufügende Menge einer Tränkekomponente) auf einer Anzeige 30 angezeigt oder als Sprachnachricht mit einer Sprachausgabeeinrichtung 32 mitgeteilt werden.

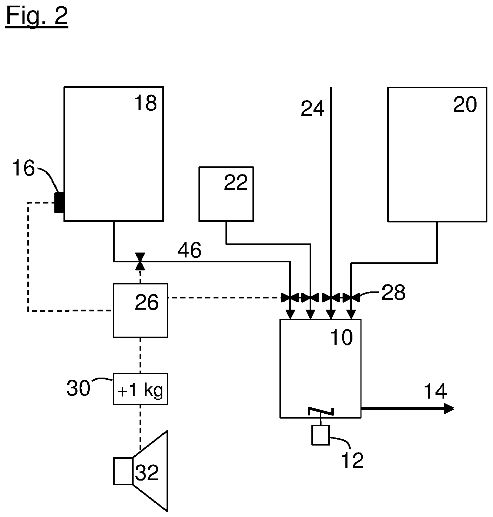

Figur 2 zeigt eine ähnliche Vorrichtung wie Figur 1. Einziger Unterschied ist, dass das Refraktometer 16 nicht dem Anmischbehälter 10, sondern dem Vorratsbehälter 18 für Vollmilch zugeordnet ist. Daher kann die elektronische Steuerung 26 auf Grundlage des gemessenen Brechungsindex der Vollmilch in dem Vorratsbehälter 18 eine Menge einer anderen Tränkekomponente berechnen, die in den Anmischbehälter 10 eingegeben werden muss, um einen vorgegebenen Trockensubstanzgehalt der angemischten Tränke zu erzielen. Die berechnete Menge kann wiederum auf der Anzeige 30 oder mit der Sprachausgabeeinrichtung 32 ausgegeben werden. Alternativ oder zusätzlich kann die Steuerung 26 die betreffende Dosiereinrichtung 28 auch automatisch ansteuern, um die berechnete Menge in den Anmischbehälter 10 zu dosieren.

Die beiden Ausführungsbeispiele der Figuren 1 und 2 können auch miteinander kombiniert werden, d.h. es kann sowohl der Vorratsbehälter 18 für Vollmilch als auch der Anmischbehälter 10 mit einem Refraktometer ausgestattet werden, sodass wahlweise eine der beiden oder beide Brechungsindizes von der Steuerung 26 berücksichtigt werden können. Eine weitere Alternative, die in den Figuren 1 und 2 nicht dargestellt ist, besteht in einer Anordnung des Refraktometers 16 in der Zuführleitung 46, die von dem Vorratsbehälter 18 zu dem Anmischbehälter 10 führt, beispielsweise stromaufwärts der in dieser Leitung angeordneten Dosiereinrichtung 28.

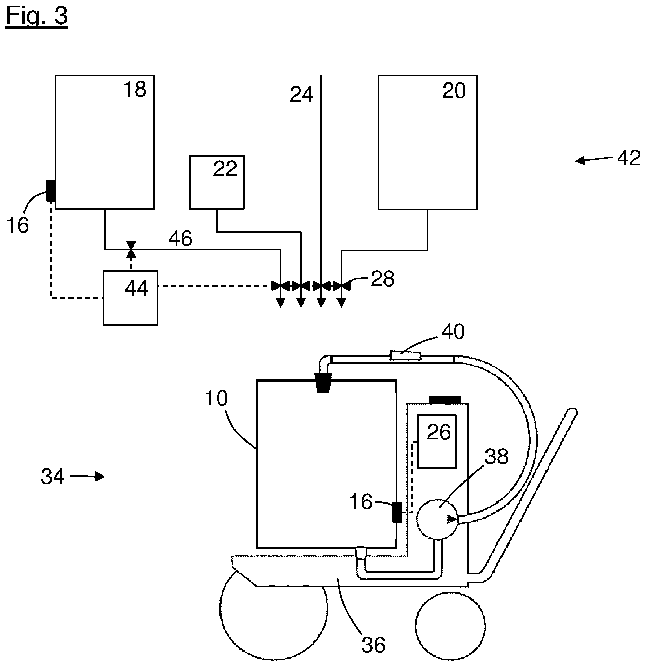

Im Ausführungsbeispiel der Figur 3 umfasst die Vorrichtung einen Milchwagen 34, der ein Fahrgestell 36 auf Rädern, eine Fördereinrichtung 38 und eine Abgabeeinrichtung 40 für die in dem auf dem Milchwagen 34 angeordneten, großen Anmischbehälter 10 angemischten Tränke aufweist. Zum Durchmischen der Tränke kann die mit der Fördereinrichtung 38 aus dem Anmischbehälter 10 abgepumpte Tränke über die Abgabevorrichtung 40 in den Anmischbehälter 10 zurückgeführt werden.

Der Milchwagen 34 weist eine Steuerung 26 auf, die mit einem dem Anmischbehälter 10 des Milchwagens 34 zugeordneten Refraktometer 16 verbunden ist.

Weitere Elemente der Vorrichtung sind in Form einer Befüllstation 42 an einem festen Platz angeordnet. Die Befüllstation 42 umfasst die in den vorherigen Ausführungsbeispielen dem Tränkeautomaten zugeordneten, folgenden Elemente: einen Vorratsbehälter 18 für Vollmilch, einen Vorratsbehälter 20 für Milchaustauschpulver, eine Leitung 24, die mit einem Wasseranschluss verbunden ist, und einen Vorratsbehälter 22 für Zusatzstoffe. Jedem der Vorratsbehälter 18, 20, 22 sowie der Leitung 24 ist eine Dosiereinrichtung 28 zugeordnet, die mit einer weiteren, der Befüllstation zugeordneten Steuerung 44 verbunden ist. Diese Steuerung 44 ist auch mit einem Refraktometer 16 verbunden, das dem Vorratsbehälter 18 für Vollmilch zugeordnet ist. Die Steuerung 26 des Milchwagens 34 und die weitere Steuerung 44 der Befüllstation 42 können miteinander über eine nicht dargestellte, vorzugsweise drahtlose Datenverbindung kommunizieren.

Die Dosiereinrichtungen 28 sind so angeordnet, dass die jeweiligen Tränkekomponenten unmittelbar in den Anmischbehälter 10 des Milchwagens 34 dosiert werden können, wenn dieser an dem dafür vorgesehenen Platz im Bereich der Befüllstation 42 abgestellt wird.

### Liste der Bezugszeichen

- 10: Anmischbehälter
- 12: Rührwerk
- 14: Pfeil
- 16: Refraktometer
- 18: Vorratsbehälter für Vollmilch
- 20: Vorratsbehälter für Milchaustauschpulver
- 22: Vorratsbehälter für Zusatzstoffe
- 24: Leitung
- 26: Steuerung
- 28: Dosiereinrichtung
- 30: Anzeige
- 32: Sprachausgabeeinrichtung
- 34: Milchwagen
- 36: Fahrgestell
- 38: Fördereinrichtung
- 40: Abgabeeinrichtung
- 42: Befüllstation
- 44: weitere Steuerung
- 46: Zuführleitung

## Patentansprüche

1. Verfahren zur Zubereitung einer Tränke zur Fütterung von Nutztieren durch Anmischen einer Tränke aus mehreren Tränkekomponenten in einem Anmischbehälter (10), wobei die Tränkekomponenten eine flüssige Komponente und Milchaustauschpulver umfassen und das Verfahren die folgenden Schritte aufweist:
• Messen eines Brechungsindex der flüssigen Komponente und/oder der angemischten Tränke mit einem Refraktometer (16), und
• Berechnen einer Menge einer Tränkekomponente, die in den Anmischbehälter (10) einzugeben ist, um einen vorgegebenen Trockensubstanzgehalt der Tränke zu erzielen, wobei das Berechnen mit einer elektronischen Steuerung (26) auf Grundlage des gemessenen Brechungsindex erfolgt und die Steuerung (26) mit dem Refraktometer (16) verbunden ist und das Messen des Brechungsindex sowie das Berechnen vollautomatisch erfolgen.

2. Verfahren nach Anspruch 1, **dadurch gekennzeichnet, dass** zusätzlich ein Trockensubstanzgehalt der angemischten Tränke berechnet wird.

3. Verfahren nach Anspruch 1, **dadurch gekennzeichnet, dass** die Steuerung (26) die berechnete Menge protokolliert und/oder einem Benutzer mittels einer Nachricht, Anzeige oder Sprachausgabe mitteilt, und/oder nach Anspruch 2, **dadurch gekennzeichnet, dass** die Steuerung (26) den berechneten Trockensubstanzgehalt protokolliert und/oder einem Benutzer mittels einer Nachricht, Anzeige oder Sprachausgabe mitteilt.

4. Verfahren nach Anspruch 2 oder 3, **dadurch gekennzeichnet, dass** die Steuerung (26), falls der berechnete Trockensubstanzgehalt über ein vorgegebenes Maß hinaus von einem Sollwert abweicht, auf einen leeren Vorratsbehälter (18, 20, 22) schließt und einen Benutzer mittels einer Nachricht, Anzeige oder Sprachausgabe entsprechend informiert.

5. Verfahren nach einem der Ansprüche 1 bis 4, **dadurch gekennzeichnet, dass** die berechnete Menge automatisch mit einer Dosiereinrichtung (28) in den Anmischbehälter (10) eingegeben wird.

6. Verfahren nach einem der Ansprüche 1 bis 5, **dadurch gekennzeichnet, dass** auf Grundlage der berechneten Menge eine Dosiereinrichtung (28) für die betreffende Tränkekomponente kalibriert wird, und/oder nach einem der Ansprüche 2 bis 5, **dadurch gekennzeichnet, dass** auf Grundlage des berechneten Trockensubstanzgehalts eine Dosiereinrichtung (28) für die betreffende Tränkekomponente kalibriert wird.

7. Verfahren nach einem der Ansprüche 1 bis 6, **dadurch gekennzeichnet, dass** die flüssige Komponente Vollmilch ist und/oder dass die Tränkekomponenten einen Zusatzstoff umfassen.

8. Verfahren nach einem der Ansprüche 2 bis 10, **dadurch gekennzeichnet, dass** die flüssige Komponente Wasser ist und dass die Tränkekomponente, deren Menge berechnet wird, Milchaustauschpulver oder ein Zusatzstoff ist, wobei die Steuerung (26) anhand der berechneten Menge und/oder anhand des berechneten Trockensubstanzgehalts der angemischten Tränke eine Qualitätsbewertung des Milchaustauschpulvers oder Zusatzstoffs vornimmt, wobei die Steuerung (26) das Ergebnis der Qualitätsbewertung protokolliert und/oder einem Benutzer mittels einer Nachricht, Anzeige oder Sprachausgabe mitteilt.

9. Vorrichtung zur Zubereitung einer Tränke zur Fütterung von Nutztieren, wobei die Vorrichtung folgendes aufweist:
• einen Anmischbehälter (10) zum Anmischen der Tränke aus mehreren Tränkekomponenten, wobei die Tränkekomponenten eine flüssige Komponente und Milchaustauschpulver umfassen,
• ein Refraktometer (16), das entweder dem Anmischbehälter (10) zugeordnet und dazu ausgebildet ist, einen Brechungsindex der in dem Anmischbehälter (10) befindlichen Tränke zu messen, oder das einem Vorratsbehälter (18) für die flüssige Komponente zugeordnet und dazu ausgebildet ist, einen Brechungsindex der flüssigen Komponente zu messen, und
• einer elektronischen Steuerung (26), die mit dem Refraktometer (16) verbunden und dazu ausgebildet ist, vollautomatisch auf Grundlage des gemessenen Brechungsindex eine Menge einer Tränkekomponente, die in den Anmischbehälter (10) einzugeben ist, um einen vorgegebenen Trockensubstanzgehalt der Tränke zu erzielen, zu berechnen.

10. Vorrichtung nach Anspruch 9, **dadurch gekennzeichnet, dass** die elektronische Steuerung (26) dazu ausgebildet ist, auf Grundlage des gemessenen Brechungsindex einen Trockensubstanzgehalt der angemischten Tränke zu berechnen.

11. Vorrichtung nach Anspruch 9 oder 10, **dadurch gekennzeichnet, dass** die Vorrichtung einen Datenspeicher und/oder eine Kommunikationseinrichtung und/oder eine Anzeige (30) und/oder eine Sprachausgabeeinrichtung (32) aufweist, wobei die Steuerung (26) dazu ausgebildet ist, die Menge und/oder den Trockensubstanzgehalt in dem Datenspeicher zu protokollieren und/oder in Form einer Nachricht mit der Kommunikationseinrichtung zu versenden und/oder auf der Anzeige (30) anzuzeigen und/oder in Form einer Sprachausgabe mit der Sprachausgabeeinrichtung (32) auszugeben.

12. Vorrichtung nach einem der Ansprüche 9 bis 11, **dadurch gekennzeichnet, dass** die Vorrichtung eine Dosiereinrichtung (28) für eine Tränkekomponente aufweist.

13. Vorrichtung nach einem der Ansprüche 9 bis 12, **dadurch gekennzeichnet, dass** die Steuerung (26) dazu ausgebildet ist, die berechnete Menge durch Ansteuern der Dosiereinrichtung (28) automatisch in den Anmischbehälter (10) einzugeben.

14. Vorrichtung nach einem der Ansprüche 9 bis 13, **dadurch gekennzeichnet, dass** die Steuerung (26) dazu ausgebildet ist, die Dosiereinrichtung (28) auf Grundlage der berechneten Menge oder des berechneten Trockensubstanzgehalts zu kalibrieren.

15. Vorrichtung nach einem der Ansprüche 9 bis 14, **dadurch gekennzeichnet, dass** die Vorrichtung ein Tränkeautomat oder ein Milchwagen (34) ist, wobei der Milchwagen (34) insbesondere mit einer Befüllstation (42) kombiniert ist, die den Vorratsbehälter (18) und/oder die Dosiereinrichtung (28) aufweist.

## Claims

1. A method for preparing a liquid feed for feeding livestock by mixing a liquid feed consisting of a plurality of liquid feed components in a mixing container (10), wherein the liquid feed components comprise a liquid component and milk replacement powder and the method comprises the following steps:
• measuring a refractive index of the liquid component and/or the mixed liquid feed by a refractometer (16) and
• calculating a quantity of a liquid feed component which is to be added into the mixing container (10) in order to achieve a predetermined dry matter content of the liquid feed, wherein the calculation is carried out by an electronic controller (26) on the basis of the measured refractive index and the controller (26) is connected to the refractometer (16) and the measurement of the refractive index and the calculation take place automatically.

2. The method according to claim 1, **characterized in that** a dry matter content of the mixed liquid feed is additionally calculated.

3. The method according to claim 1, **characterized in that** the controller (26) records the calculated quantity and/or informs a user by means of a message, display or voice output, and/or according to claim 2, **characterized in that** the controller (26) records the calculated dry matter content and/or informs a user by means of a message, display or voice output.

4. The method according to claim 2 or 3, **characterized in that** if the calculated dry matter content deviates from a target value by more than a predetermined amount, the controller (26) infers an empty storage container (18, 20, 22) and correspondingly informs a user by means of a message, display or voice output.

5. The method according to one of claims 1 to 4, **characterized in that** the calculated quantity is automatically added by a metering apparatus (28) into the mixing container (10).

6. The method according to one of claims 1 to 5, **characterized in that** a metering apparatus (28) for the relevant liquid feed component is calibrated on the basis of the calculated quantity, and/or according to one of claims 2 to 5, **characterized in that** a metering apparatus (28) for the relevant liquid feed component is calibrated on the basis of the calculated dry matter content.

7. The method according to one of claims 1 to 6, **characterized in that** the liquid component is whole milk and/or that the liquid feed components comprise an additive.

8. The method according to one of claims 2 to 10, **characterized in that** the liquid component is water and that the liquid feed component is milk replacement powder or an additive, the quantity thereof being calculated, wherein the controller (26) undertakes a quality control of the milk replacement powder or additive on the basis of the calculated quantity and/or on the basis of the calculated dry matter content of the mixed liquid feed, wherein the controller (26) records the result of the quality control and/or informs a user by means of a message, display or voice output.

9. A device for preparing a liquid feed for feeding livestock, wherein the device comprises the following:
• a mixing container (10) for mixing the liquid feed consisting of a plurality of liquid feed components, wherein the liquid feed components comprise a liquid component and milk replacement powder,
• a refractometer (16) which is either assigned to the mixing container (10) and configured to measure a refractive index of the liquid feed located in the mixing container (10), or assigned to a storage container (18) for the liquid component and configured to measure a refractive index of the liquid component, and
• an electronic controller (26) which is connected to the refractometer (16) and is configured to calculate fully automatically, and on the basis of the measured refractive index, a quantity of a liquid feed component which is to be added into the mixing container (10) in order to achieve a predetermined dry matter content of the liquid feed.

10. The device according to claim 9, **characterized in that** the electronic controller (26) is configured to calculate a dry matter content of the mixed liquid feed on the basis of the measured refractive index.

11. The device according to claim 9 or 10, **characterized in that** the device has a data storage device and/or a communication apparatus and/or a display (30) and/or a voice output apparatus (32), wherein the controller (26) is configured to record the quantity and/or the dry matter content in the data storage device and/or to transmit this in the form of a message by the communication apparatus and/or to display this on the display (30) and/or to output this in the form of a voice output by the voice output apparatus (32).

12. The device according to one of claims 9 to 11, **characterized in that** the device has a metering apparatus (28) for a liquid feed component.

13. The device according to one of claims 9 to 12, **characterized in that** the controller (26) is configured to add the calculated quantity automatically into the mixing container (10) by activating the metering apparatus (28).

14. The device according to one of claims 9 to 13, **characterized in that** the controller (26) is configured to calibrate the metering apparatus (28) on the basis of the calculated quantity or the calculated dry matter content.

15. The device according to one of claims 9 to 14, **characterized in that** the device is an automatic feeder or a milk cart (34), wherein the milk cart (34) is combined, in particular, with a filling station (42) which comprises the storage container (18) and/or the metering apparatus (28).

## Revendications

1. Procédé de préparation d'un breuvage destiné à l'alimentation d'animaux d'élevage par mélange d'un breuvage à partir de plusieurs composants de breuvage dans un récipient de mélange (10), dans lequel les composants de breuvage comportent un composant liquide et de la poudre de lactoremplaceur et le procédé présente les étapes suivantes :
• mesure d'un indice de réfraction du composant liquide et/ou du breuvage mélangé à l'aide d'un réfractomètre (16), et
• calcul d'une quantité d'un composant de breuvage à ajouter dans le récipient de mélange (10), de manière à obtenir une teneur en matière sèche prédéfinie du breuvage, dans lequel le calcul est effectué à l'aide d'une commande électronique (26) sur la base de l'indice de réfraction mesuré et la commande (26) est reliée au réfractomètre (16) et la mesure de l'indice de réfraction ainsi que le calcul sont effectués de façon entièrement automatique.

2. Procédé selon la revendication 1, **caractérisé en ce qu'**une teneur en matière sèche du breuvage mélangé est également calculée.

3. Procédé selon la revendication 1, **caractérisé en ce que** la commande (26) enregistre la quantité calculée et/ou la communique à un utilisateur au moyen d'un message, d'un affichage ou d'une sortie vocale, et/ou selon la revendication 2, **caractérisé en ce que** la commande (26) enregistre la teneur en matière sèche et/ou la communique à un utilisateur au moyen d'un message, d'un affichage ou d'une sortie vocale.

4. Procédé selon la revendication 2 ou 3, **caractérisé en ce que** la commande (26), dans le cas où la teneur en matière sèche calculée s'écarte d'une valeur de consigne au-delà d'une mesure prédéfinie, conclut qu'un récipient de stockage (18, 20, 22) est vide et informe un utilisation en conséquence au moyen d'un message, d'un affichage ou d'une sortie vocale.

5. Procédé selon l'une des revendications 1 à 4, **caractérisé en ce que** la quantité calculée est introduite automatiquement dans le récipient de mélange (10) à l'aide d'un dispositif de dosage (28).

6. Procédé selon l'une des revendications 1 à 5, **caractérisé en ce qu'**un dispositif de dosage (28) pour le composant de breuvage concerné est étalonné sur la base de la quantité calculée, et/ou selon l'une des revendications 2 à 5, **caractérisé en ce qu'**un dispositif de dosage (28) pour le composant de breuvage concerné est étalonné sur la base de la teneur en matière sèche calculée.

7. Procédé selon l'une des revendications 1 à 6, **caractérisé en ce que** le composant liquide est du lait entier et/ou **en ce que** les composants de breuvage comportent un adjuvant.

8. Procédé selon l'une des revendications 2 à 10, **caractérisé en ce que** le composant liquide est de l'eau et **en ce que** le composant de breuvage, dont la quantité est calculée, est une poudre de lactoremplaceur ou un adjuvant, dans lequel la commande (26) effectue une évaluation de qualité de la poudre de lactoremplaceur ou de l'adjuvant à l'aide de la quantité calculée et/ou à l'aide de la teneur en matière sèche calculée du breuvage mélangé, dans lequel la commande (26) enregistre le résultat de l'évaluation de qualité et/ou le communique à un utilisateur au moyen d'un message, d'un affichage ou d'une sortie vocale.

9. Dispositif de préparation d'un breuvage destiné à l'alimentation d'animaux d'élevage, dans lequel le dispositif présente les éléments suivants :
• un récipient de mélange (10) pour le mélange d'un breuvage à partir de plusieurs composants de breuvage, dans lequel les composants de breuvage comportent un composant liquide et de la poudre de lactoremplaceur,
• un réfractomètre (16), lequel est soit attribué au récipient de mélange (10) et conçu pour mesurer un indice de réfraction du breuvage situé dans le récipient de mélange (10), ou lequel est attribué à un récipient de stockage (18) pour le composant liquide et conçu pour mesurer un indice de réfraction du composant liquide, et
• une commande électronique (26), laquelle est reliée au réfractomètre (16) et conçue pour calculer de façon entièrement automatique, sur la base de l'indice de réfraction mesuré, une quantité d'un composant de breuvage à ajouter dans le récipient de mélange (10), afin d'obtenir une teneur en matière sèche prédéfinie du breuvage.

10. Dispositif selon la revendication 9, **caractérisé en ce que** la commande électronique (26) est conçue pour calculer une teneur en matière sèche du breuvage mélangé sur la base de l'indice de réfraction mesuré.

11. Dispositif selon la revendication 9 ou 10, **caractérisé en ce que** le dispositif présente une mémoire de données et/ou un moyen de communication et/ou un affichage (30) et/ou un moyen de sortie vocale (32), dans lequel la commande (26) est conçue pour enregistrer la quantité et/ou la teneur en matière sèche dans la mémoire de données et/ou pour l'envoyer sous la forme d'un message à l'aide du moyen de communication et/ou pour l'afficher sur l'affichage (30) et/ou pour l'émettre sous la forme d'une sortie vocale à l'aide du moyen de sortie vocale (32).

12. Dispositif selon l'une des revendications 9 à 11, **caractérisé en ce que** le dispositif présente un dispositif de dosage (28) pour un composant de breuvage.

13. Dispositif selon l'une des revendications 9 à 12, **caractérisé en ce que** la commande (26) est conçue pour introduire automatiquement la quantité calculée dans le récipient de mélange (10) par actionnement du dispositif de dosage (28).

14. Dispositif selon l'une des revendications 9 à 13, **caractérisé en ce que** la commande (26) est conçue pour étalonner le dispositif de dosage (28) sur la base de la quantité calculée ou de la teneur en matière sèche calculée.

15. Dispositif selon l'une des revendications 9 à 14, **caractérisé en ce que** le dispositif est un distributeur de breuvage ou un camion de lait (34), dans lequel le camion de lait (34) est en particulier combiné à une station de remplissage (42), laquelle présente le récipient de stockage (18) et/ou le dispositif de dosage (28).
